# EUROPÄISCHE PATENTANMELDUNG

(11) **EP 1 101 604 A1**
(43) Veröffentlichungstag der Anmeldung: **23.05.2001**
(21) Anmeldenummer: 00124993.7
(22) Anmeldetag: 16.11.2000
(51) Int. Cl.: B32B 21/06, A47B 96/20

(54) **Verbundmaterial aus gewellter Presspappe (Wellpappe), Zuschnitte und Endprodukte hieraus**

(30) Priorität: 16.11.1999 DE 19955183
(71) Anmelder: Wiegmann, Gerhard, 30449 Hannover (DE)
(72) Erfinder: Wiegmann, Gerhard, 30449 Hannover (DE)
(74) Vertreter: Läufer, Martina

(57) **Zusammenfassung**

Die Erfindung beschreibt ein Verbundmaterial aus gewellter Presspappe mit einem weiteren Material. Dieses Material kann Sperrholz oder ein anderes plattenförmiges, hinlänglich steifes, jedoch flexibel bieg- und rollbares Holzmaterial, das mit einem Klebstoff mit der gewellten Presspappe verbunden ist, sein. Zuschnitte des erfindungsgemäßen Verbundmaterials können zur Herstellung von zweckfreien Objekten, Möbeln, Möbelteilen, Innenausbauten und Teilen hiervon, von Särgen, Koffern, Behältern, Stell- und Abtrennwänden oder sonstigen Verbundmaterial herzustellenden Endprodukten dienen, dabei können Sägeschnitte, Nuten, V-Nuten, Durchbrechungen, Ösen oder sonstige Bearbeitungsmerkmale wie ein Falten oder Weiterverarbeiten des Zuschnitts zu den gewünschten Endprodukten erleichtern oder ermöglichen.

## Beschreibung

Die Erfindung betrifft ein Verbundmaterial aus gewellter Presspappe mit einem weiteren Material.
Ferner betrifft die Erfindung Zuschnitte aus dem Verbundmaterial sowie zugehörige Endprodukte, nämlich Objekte, Möbel, Möbelteile, Innenausbauten und weitere Gebrauchsteile, wie z. B. Särge, Koffer, Behälter, Stell- und Abtrennwände.

Eine gewellte Presspappe mit guten im Sinne der Erfindung geeigneten Grundeigenschaften ist ein unter dem Namen "Wellboard" bekanntes Material. Wellboard findet seit einigen Jahren im Messebau Verwendung, wird aus organischem Fasermaterial unter großem Druck und bei starker Hitze zu wellenförmigen Platten gepresst und ist in verschiedenen Materialstärken und Wellenabständen erhältlich. Wellboard ist aufrollbar und wird in den Materialstärken 1 - 2 mm und den Formaten 200 x 440 cm, 200 x 520 cm und 315 x 520 cm in Papprollen von 20 oder 28 cm Durchmesser verpackt geliefert. Die kleinen Packmaße und das geringe Materialgewicht helfen, Kosten bei Transport und Lagerung zu sparen.

Beim Herstellungsprozess wird auf Leime und Bindemittel verzichtet. Wellboard ist verrottbar und absolut umweltverträglich. Es lässt sich mit Kreissägen und Fräsen spannend bearbeiten sowie lasern und wasser-strahlschneiden. Eine Oberflächenbehandlung kann mit handelsüblichen Lacken Lasuren und Beizen vorgenommen werden. Um den im Messebau üblichen Brandschutzvorschriften zu entsprechen, kann es mit in Wasser gelöstem Borsalz oder dem Silikat Wasserglas getränkt werden. Wellboard besteht aus einem reinen Cellulosefasermaterial (Pappe) im wesentlichen ohne Zusätze. Bei der Behandlung mit Borsalz treten jedoch massive Probleme auf, das Wellboard quillt und verliert seine Maßhaltigkeit. Je nach Raumtemperatur und Luftfeuchtigkeit beträgt die Längenänderung quer zur Welle +/-8 %. Bei einer Ausrüstung mit Wasserglas verliert Wellboard seine Flexibilität und wird spröde. Die vorher raue und matte Oberflächentextur wird glatt und glänzend. Die beiden letztgenannten Verfahren führen daher zu ungenügenden Resultaten.

Die Aufgabe der Erfindung besteht daher in einer Verbesserung der Eigenschaften gewellter Presspappe, insbesondere des Werkstoffs Wellboard. Die Verbesserung soll insbesondere in Bezug auf Haltbarkeit und Maßhaltigkeit erfolgen. Der verbesserte Werkstoff soll die Herstellung neuer in ihren Eigenschaften innovativer Produkte ermöglichen.
Die Erfindung beruht u. a. auf dem Gedanken, das Material einseitig mit einer dünnen, flexiblen Schicht zu beleimen, um die Maßhaltigkeit Flexibilität und Aufrollbarkeit des Wellboards auch nach einer flammenhemmenden Ausrüstung zu gewährleisten. Die Schicht sollte aus nachwachsenden Rohstoffen oder organischem Material beschaffen sein um auch ökologischen Kriterien gerecht werden zu können.

Die Aufgabe wird gelöst mit Hilfe eines Verbundmaterials der eingangs genannten Art, welches aus Sperrholz oder einem anderen plattenförmigen, hinlänglich steifen, jedoch flexibel bieg- und rollbaren Holzmaterial besteht, das mit einem Klebstoff mit der gewellten Presspappe verbunden ist.
Das plattenförmige Holzmaterial kann auf einer oder beiden Oberflächen mit gewellter Presspappe verbunden sein.
Vorzugsweise besteht das plattenförmige Holzmaterial aus Flugzeugsperrholz. Die Lösung nach dieser Erfindung umfasst ferner Zuschnitte aus dem erfindungsgemäßen Verbundmaterial für die Fertigung von zweckfreien Objekten, von Möbeln, Möbelteilen, Innenausbauteilen und Teilen hiervon, von Särgen, Koffern, Behältern, Stell- und Abtrennwänden oder sonstigen aus Verbundmaterial herzustellenden Endprodukten.
Die Zuschnitte können plattenmaterialseitig Sägeschnitte, Nuten, V-Nuten, Durchbrechungen, Ösen oder sonstige Bearbeitungsmerkmale umfassen, die ein Falten oder Weiterverarbeiten der Zuschnitte zu den gewünschten Endprodukten erleichtern oder ermöglichen. Diese Endprodukte können insbesondere Objekte, Möbel, Möbelteile, Innenausbauten und Teile davon, Särge, Koffer, Behälter, Stell- und Abtrennwände sein.

Die folgenden Materialien sind für die Erfindung besonders geeignet.
Flugzeugsperrholz wird im Handel in sechs unterschiedlichen Stärken angeboten (0,8 bis 3,0 mm). Extrem dünne Birkenschälfurniere sind kreuzweise übereinandergeschichtet und wetterfest verleimt. Als besonders geeignet wurde 1,0 mm starkes, dreilagig aufgebautes, hochflexibles Flugzeugsperrholz ausgewählt
Hartpapiere sind in verschieden Stärken erhältlich und werden ohne Bindemittel gepresst.
   Sowohl Flugzeugsperrholz als auch Hartpapiere lassen sich mit dünnen Echtholzfurnieren oder textilen Stoffen beleimen. Farbige Lackierungen, Beizen, Öle und Wachse lassen sich auftragen.
Von den drei lieferbaren Wellboardvarianten wurde "Wellboard Minimum" ausgewählt, da es am leichtesten und flexibelsten ist. Außerdem verhält es sich bei der Bearbeitung weniger sperrig als andere Varianten. Wellboard Minimum wird in den Maßen 200 x 440 cm in Papprollen von 20 cm Durchmesser x 200 cm geliefert. Die Materialstärke beträgt 1 mm, die Wellenhöhe 4 mm und der Wellenabstand 10 mm.

Das Wellpappenmaterial kann auch mit Metallfolien oder dünnen Blechen sowie mit dünnen Kunststoffplatten verleimt werden. Wesentlich ist, dass das Wellmaterial an den "Wellenbergen" mit einem ebenen, festen, jedoch auch biegsamen bzw. flexiblen Material einer gewissen Steifigkeit verbunden wird, vorzugsweise durch verleimen.

Gewellte Presspappe, insbesondere Wellboard lässt sich unter handelsüblichen Furnierpressen mit Flugzeugsperrholz bzw. Hartpapieren beleimen. Als geeigneten Leim wurde wasserfreier Weißleim ausgewählt da er nach dem Erkalten dauerelastisch bleibt. Der Leimauftrag erfolgt am besten durch eine Leimrolle mit Gummiwalze längs zur Wellstruktur auf das Wellboard. Bei geringerem Pressdruck, um die Welle nicht zu zerquetschen, und hohen Temperatur beträgt die erforderliche Presszeit etwa 15 bis 20 Minuten. Es können auch andere geeignete Leime verwendet werden.

Das neue Verbundmaterial zeichnet sich durch verbesserte Torsionssteifigkeit aus. Mit Flugzeugsperrholz beleimt lassen sich besonders bei Wellboard extrem kleine Biegeradien erzielen (Durchmesser ca. 5 cm). Das Material ist sehr feuchtigkeitsunempfindlich und bietet durch seine Echtholzoberfläche sehr reizvolle Einsatzmöglichkeiten. Die Verpackung kann in den herkömmlichen Pappröhren erfolgen.

Bei der Beleimung mit Hartpapier versteift sich die gewellte Presspappe noch mehr, eine Verpackung in Pappröhren ist wegen des großen Biegeradius (Durchmesser ca. 35 cm) nicht möglich. Das Materialgewicht ist erheblich höher als bei der Verwendung von Flugsperrholz. Das Problem der Maßhaltigkeit bei der Behandlung mit Borsalz bleibt bestehen.

Die Materialkombination gewellte Presspappe/Sperrholz (im Folgenden "Wellholz" genannt), insbesondere Wellboard/Flugzeugsperrholz, lässt sich mit konventionellen Holzbearbeitungsmaschinen sägen, bohren und fräsen. Es kann somit von jeder mittelständischen Tischlerei verarbeitet werden. Zum Knicken des Materials sind in die Sperrholzoberseite Sägeschnitte, Nuten oder V-Nuten einzubringen. Die Tiefe sollte etwa zwei Drittel der Materialstärke betragen und quer oder diagonal zur Wellstruktur verlaufen. Die Verwendung von V-Nutfräsern verschiedener Fräswinkel erlaubt unterschiedliche Knickwinkel des Materials. Alle Knickungen lassen sich dauerhaft mit Weißleim fixieren. Dauerelastisches Ausspritzen der Nuten mit z. B. Silikon ist möglich - das Material bleibt aufrollbar.

Schwerentflammbarkeit kann durch Spritzen oder Streichen des Wellboards mit in Wasser gelöstem Borsalz erfolgen (Salzanteil 15 %). Materialkanten lassen sich durch Aufklemmen von Gummi oder Aluminiumprofilen vor eventuellen Beschädigungen schützen. Durch Anbringen von Ösen und Nieten lassen sich gefaltete Elemente mit Stahlseilen oder Zugstäben verspannen. Da auch im Handwerk zunehmend am Computer entworfen wird besteht die Möglichkeit durch Erstellen einer CAD-Konstruktionszeichnung Teile in großen Stückzahlen außerbetrieblich fertigen zu lassen. Als besonders geeignetes Verfahren empfiehlt sich die Bearbeitung durch Laser, mit denen die für Knickungen benötigten Nuten oder V-Nuten realisiert werden können. Natürlich kann auch CNC-gefräst werden.

Wellholz aus "Wellboard Minimum" und Flugzeugsperrholz (1 mm) hätte ca. 5 - 6 mm Plattenstärke. Bei Beibehaltung der Rollgröße von "Wellboard Minimum" (200 x 400 cm) könnte Wellholz in den herkömmlichen Papprollen von 20 cm Durchmesser geliefert werden. Flugzeugsperrholz ist im Handel nur in den Plattengrößen 150 x 150 cm erhältlich, es kann theoretisch jedoch größer produziert werden.

Im Gegensatz zu den heute gängigen, flexiblen Plattenwerkstoffen, die im Innenausbau Verwendung finden (Sperrholz, Topan, Hartfaser, Biegesperrholz), bietet Wellholz einige entscheidende Vorteile. Bisher ist die Herstellung gekrümmter oder gewölbter Flächen nur zweischalig möglich. Die Einzelteile müssen in Hilfsschablonen gegeneinander verleimt werden, womit sich der jeweilige Materialpreis verdoppelt. Darüber hinaus sind unter hohem Zeitaufwand aufwendige Positiv/Negativschablonen zu fertigen. Knickungen sind bei allen herkömmlichen Materialien grundsätzlich nicht möglich. Mit Wellholz lassen sich erstmalig bei einem Holzwerkstoff aus einer Rolle selbstaussteifende Korpusse fertigen. Dem Handwerker bieten sich somit völlig neue Gestaltungsmöglichkeiten. Computergestützte Fertigung in holzverarbeitenden Betrieben führt zu einer Neudefinition von Einzelstück und Serienfertigung. Um den Break Even der Rentabilität zu erreichen, werden die notwendigen Stückzahlen geringer. Vor dem Hintergrund dieser Rahmenbedingungen könnte das Verlangen des Endverbrauchers nach Einzelstücken und individuellen Möbeln gestillt werden. Ein weiterer Vorteil ist die Aufrollbarkeit und somit platzsparende Variante des Lagerns und Transports im Pkw sowie die umwelt- und ressourcenschonende Materialqualität, die einen völlig neuen Markt erahnen lassen. Denkbare Produkte aus Wellholz wären: Faltmöbel, Stellwandsysteme, Paravents, Instrumentenkoffer, Ladeneinrichtungssysteme, Displays, CD-Racks, Faltsärge, Schalen usw.

Ein weiterer großer Vorteil der Erfindung besteht in der kostengünstigen Herstellung der Endprodukte. Zum Zeitpunkt der Erfindung galten die folgenden Preise: Die Bruttopreise liegen bei etwa 27,00 DM/qm, Wellboard Minimum bei etwa 55,00 DM/qm. Der Bruttomaterialpreis pro Quadratmeter Wellholz läge somit bei 82,00 DM/qm. Die Preise anderer flexibler Plattenwerkstoffe rangieren zwischen 5,00 DM/qm für Hartfaser, 17,00 DM/qm bis 21,00 DM/qm für Topan und 10,00 DM/qm und 45,00 DM für Furniersperrhölzer verschiedener Stärke und Qualitäten.

Im Folgenden wird die Erfindung, anhand von Beispielen näher erläutert. Anhand maßstäblich verkleinerter Modelle aus einseitig kaschierter Wellpappe wurden mögliche Faltungsvarianten simuliert. Das Hauptaugenmerk lag dabei auf Extremverformung durch Verwendung stark gekrümmter Biegelinien. Diese führen zu amorph und organisch verformten Flächen, die entstehenden Körper und Gebilde versteifen sich automatisch. Alle Varianten sind völlig frei entstanden und stellen keine konkreten Produkte dar.
Diese Versuche wurden auf Wellholz übertragen. Farbvarianten sind durch Beizen, Lacke und Lasuren denkbar. Diese Experimente führen zu folgenden, überraschenden Ergebnissen: Knicke sind bis zu 180 ° möglich und lassen sich durch aufgesteckte Metallprofile sowie dauerelastische Dichtmassen kaschieren. Häufiges Falten ist durchaus möglich ohne die Wellstruktur zu schädigen. Somit könnte z. B. auf Türscharniere verzichtet werden.

Nachfolgend wird die Erfindung anhand von Figuren näher beschrieben, wobei im Einzelnen zeigen:
- Figuren 1 bis 3:: geknickte und gewellte Körper aus Wellpappe-Verbundmaterial
- Figur 4:: gestaffelt gerolltes Verbundmaterial
- Figur 5:: oben: mehrfach geknicktes Verbundmaterial
unten: mit Ösen versehenes Verbundmaterial
- Figur 6:: unten: Wellpappe-Sperrholz-Verbundmaterial in Ansicht von der Sperrholzseite mit eingefräster V-Nut
- Figur 7:: unten: Wellpappe-Sperrholz-Verbundmaterial in z. T. engem Radius gebogen
- Figur 8:: oben: Material mit eingefasster Öse
unten: Wellpappe-Sperrholz-Verbundmaterial in Ansicht von der Sperrholzseite mit Sollknickstellen-Nut, wobei die Knickstelle von beiden Seiten mit Silikon ausgefüllt ist.
- Figur 9:: flach ausgebreitetes Verbundmaterial mit eingefrästem Faltmuster, auffaltbar
- Figur 10:: aufgerolltes und in Buchten gelegtes Sperrholz-Verbundmaterial

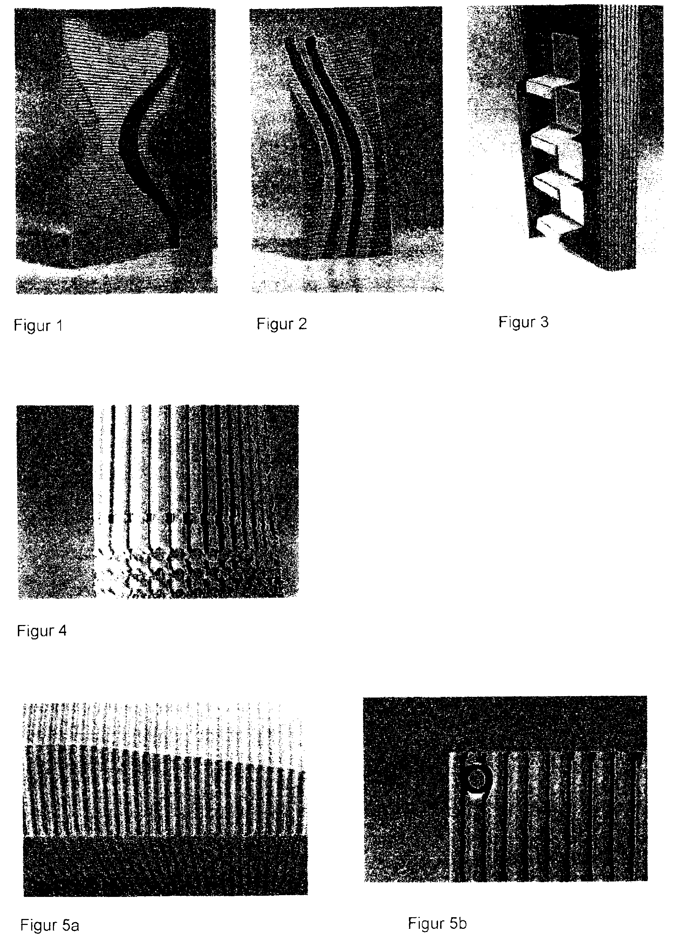

Die Figuren 1 bis 3 zeigen geknickte und gewellte Körper aus Wellpappe-Verbundmaterial und zeigen die Verformungsmöglichkeiten des Materials auf.

Figur 4 zeigt gestaffelt gerolltes Verbundmaterial.

Figur 5a zeigt mehrfach geknicktes Verbundmaterial, was die Stabilität des Materials darstellt und die Benutzung von Scharnieren oder ähnlichem nicht mehr notwendig macht.

Figur 5b zeigt ein mit Öse versehenes Verbundmaterial, das durch Anbringung einer Öse zu vielfältigen Funktionen befähigt wird.

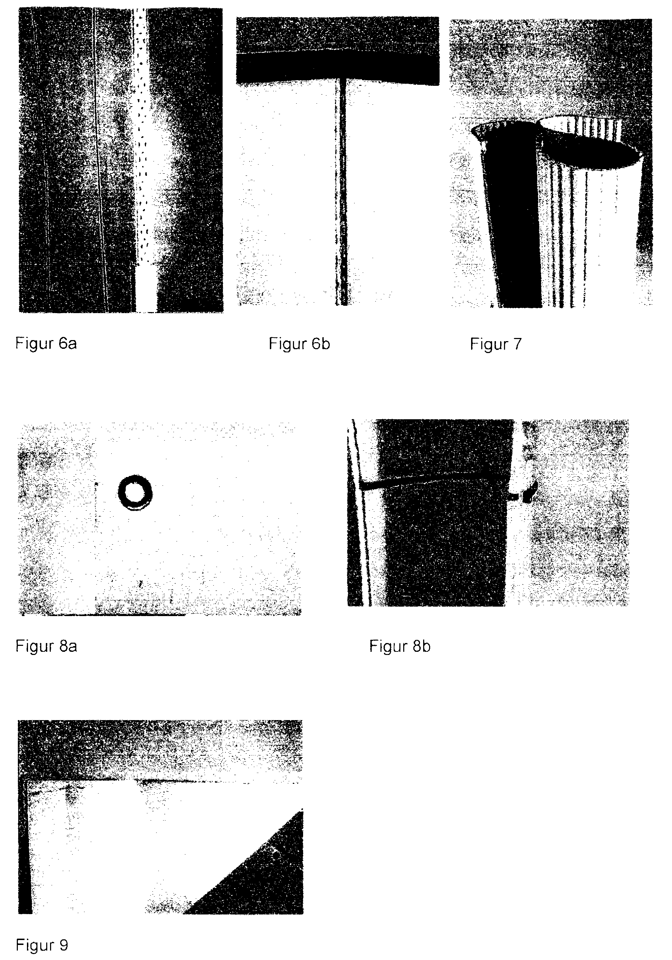

Figur 6 zeigt das Wellpappe-Sperrholz-Verbundmaterial in Ansicht in der Sperrholzseite mit eingefräster V-Nut, was die Verarbeitungsfähigkeit des Materials darstellt.

Figur 7 zeigt die Möglichkeiten das Material zu biegen, dabei können relativ kleine Radien erzielt werden.

Figur 8a zeigt das Material mit einer eingefassten Öse.

Figur 8b zeigt das Wellpappe-Sperrholz-Verbundmaterial in Ansicht von der Sperrholzseite mit Sollknickstellen-Nut, wobei die Knickstelle von beiden Seiten mit Silikon ausgefüllt ist.

Figur 9 zeigt das Verbundmaterial flach ausgebreitet. Es können Faltmuster eingefräst werden. Das Material ist auffaltbar.

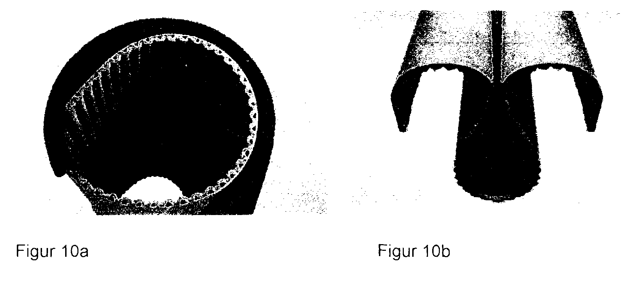

Figur 10a zeigt aufgerolltes Verbundmaterial welches die Flexibilität des Materials darstellt.

Figur 10b zeigt in Buchten gelegtes Sperrholz-Verbundmaterial. Das Material ist in verschiedene Richtungen flexibel.

## Patentansprüche

1. Verbundmaterial aus gewellter Presspappe mit einem weiteren Material dadurch gekennzeichnet, dass es aus Sperrholz oder einem anderen plattenförmigen, hinlänglich steifen, jedoch flexibel bieg- und rollbaren Holzmaterial, das mit einem Klebstoff mit der gewellten Presspappe verbunden ist, besteht.

2. Verbundmaterial nach Anspruch 1, dadurch gekennzeichnet, dass das plattenförmige Holzmaterial auf einer oder beiden Oberflächen mit gewellter Presspappe verbunden ist.

3. Verbundmaterial nach Anspruch 1 oder 2, dadurch gekennzeichnet, dass das plattenförmige Holzmaterial aus Flugzeugsperrholz ist.

4. Zuschnitt aus vorgenanntem Verbundmaterial für die Fertigung von zweckfreien Objekten, Möbeln, Möbelteilen, Innenausbauten und Teilen hiervon, von Särgen, Koffern, Behältern, Stell- und Abtrennwänden oder sonstigen aus Verbundmaterial herzustellenden Endprodukten.

5. Zuschnitt nach Anspruch 4, dadurch gekennzeichnet, dass er plattenmaterialseitig Sägeschnitte, Nuten, V-Nuten, Durchbrechungen, Ösen oder sonstige Bearbeitungsmerkmale umfasst, die ein Falten oder Weiterverarbeiten des Zuschnitts zu dem gewünschten Endprodukt erleichtern oder ermöglichen.

6. Endprodukt, insbesondere aus der Gruppe Objekte, Möbel, Möbelteile, Innenausbauten und Teile davon, Särge, Koffer, Behälter, Stell- und Abtrennwände, das aus dem Verbundmaterial nach einem der Ansprüche 1 bis 3 oder dem Zuschnitt nach Anspruch 4 oder 5 gefertigt ist.
